# EUROPEAN PATENT APPLICATION

(11) **EP 1 383 324 A1**
(43) Date of publication of application: **21.01.2004**
(21) Application number: 03001052.4
(22) Date of filing: 17.01.2003
(51) Int. Cl.: H04N 7/14

(54) **Portable electronic device and imaging system**

(30) Priority: 18.07.2002 JP 2002209915
(71) Applicant: FUJITSU LIMITED, Kawasaki-shi, Kanagawa 211-8588 (JP)
(72) Inventor: Nagai, Seiji, Kato-gun, Hyogo 673-1447 (JP); Adachi, Katsumi, Kato-gun, Hyogo 673-1447 (JP); Yagi, Kenji, Kato-gun, Hyogo 673-1447 (JP); Hirata, Koji, Kato-gun, Hyogo 673-1447 (JP); Shiroyama, Hitoshi, Nakahara-ku, Kawasaki-shi, Kanagawa 211 (JP)
(74) Representative: Sunderland, James Harry

(57) **Abstract**

The portable electronic device in the form of a mobile phone (100) includes a display (11) for displaying an image, and a camera (20) supported by a bearing (31) and a hinge module (32) for forward and reverse rotation so as to be able to take pictures of images, which can be displayed on the display, from a front side to a rear side of the display. A reflector (34) is rotated in accordance with the rotation of the camera and has a plurality of areas "A", "B", "C" of different reflection factors arranged along its circumferential direction. For determination of a control mode, a reflective photosensor (44) optically detects the rotational position of the camera by projecting a beam of light toward the reflector and by receiving the light reflected from the reflector.

## Description

The present invention relates to a portable electronic device, and more particularly, it relates to a portable electronic device provided with an imaging part (for instance, camera) supported for forward and reverse rotation so as to be able to take pictures of images that can be displayed on a display from a front side to a rear side of the device. Here, note that the portable electronic device in the present invention indicates, for example, a mobile phone, a notebook type personal computer, a PDA (personal digital assistant), a digital camera, a digital video camera, etc.

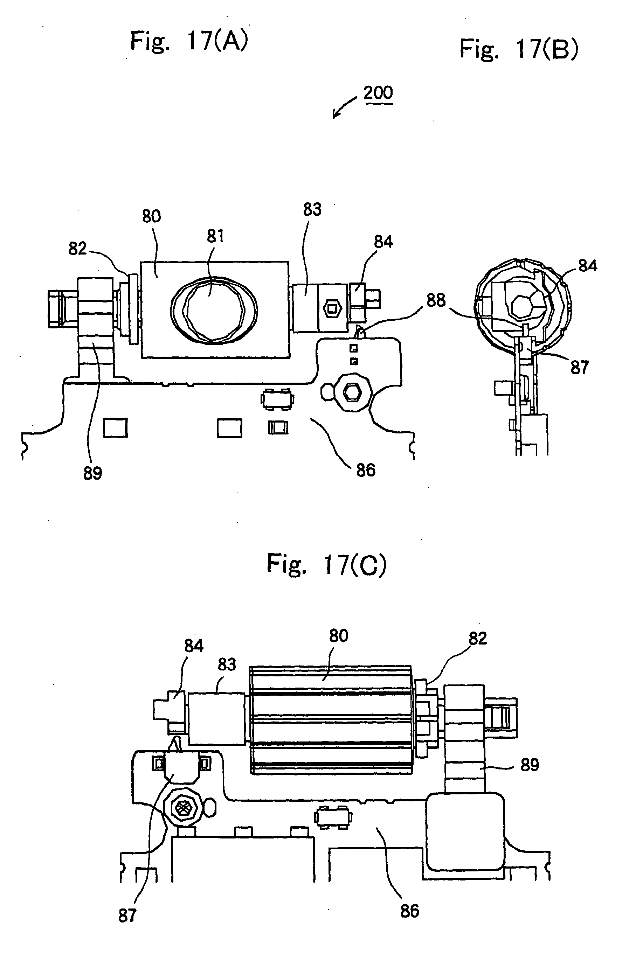

Fig. 17(A) is a front elevational view showing a camera installed on a known portable electronic device 200. Fig. 17(B) is a right side view of Fig. 17(A). Fig. 17(C) is a rear view of Fig. 17(A). In Fig. 17(A), a camera 80 is illustrated in its stationary state with its lens 81 directed to the front side of the device. However, in actuality, the camera 80 is supported for forward and reverse rotation by a bearing 82 and a hinge module 83 which are fixedly attached to a chassis (not shown). A cam 84 fixedly mounted on a rotation shaft of the camera 80 is attached to an outer side portion of the hinge module 83. On the other hand, a lever type sensor 87 is mounted on a printed circuit board 86 attached to the chassis at a location opposite to the cam 84.

In the above case, when a user turns or rotates the camera 80 so as to change the shooting or picture-taking direction thereof, the contact position of a lever 88, which is an actuator of the lever type sensor 87, with respect to the cam 84 is changed and moved to a plurality of rotational positions in accordance with the rotation of the cam 84 operatively connected with the camera 80. That is, the lever type sensor 87 detects based on the position of the lever 88 operated by the cam 84 whether the angular position of the camera 80 is a position in which it takes a picture of an erect image, or a position in which it takes a picture of an inverted image, or a camera storage position (non-shooting position). The image data taken by the camera 80 is input to the printed circuit board 86 through a flexible cable 89, and it is then displayed on a display (not shown). In this case, with respect to the representation on the display, the control mode for controlling the display is selectively switched in a proper manner among three modes which include an erect display mode in which a photographic image is displayed as it is in correspondence to the respective angular positions detected by the the lever type sensor 87, an inversion display mode in which a photographic image in its inverted state is displayed as an erect image by being rotated 180 degrees or being turned upside down, and a camera storage mode in which power is turned off.

In the known portable electronic device as mentioned above, when the positional relation between the cam and the lever of the lever type sensor is varied, the switching timing of the display control mode is accordingly influenced. In case of the portable electronic device, both the cam and the lever are very small in their dimensions, so in general there are variations in dimensions of individual these components, in addition to which assembly errors may easily take place. Thus, it is not so easy to keep the accuracy of the positional relation between both of these components. Moreover, movements or strokes of the lever for switching between the above three display modes are also very limited due to the small dimensions of these components, and hence the switching timing of the display control mode is caused to shift from the proper timing due to a secular change or aging such as wear of the these components after assembly thereof, thus making it difficult to retain the original accuracy.

The present invention is intended to solve the problems as referred to above, and has for its object to provide a portable electronic device using an imaging system which is easy to obtain assembly accuracy even if there are variations in individual components and which is less subject to aging or a secular change with the lapse of time.

In order to solve the above-mentioned problems, according to a first aspect of the present invention, there is provided a portable electronic device comprising: a display for displaying an image; an imaging part supported for forward and reverse rotation so as to be able to take pictures of images, which can be displayed on the display, from a front side to a rear side of the display; and an optical rotational position detection part for optically detecting a rotational position of the imaging part when rotated.

With the above arrangement, the angular position of the rotating imaging part is optically detected by the optical rotational position detection part, as a consequence of which even if the number of turns or rotations of the imaging part increases due to repeated shootings or shots from the front side to the rear side, there will take place substantially no reduction in detection accuracy resulting from wear or the like which would be caused in the above-mentioned known rotational position detection part.

In a preferred form of the first aspect of the present invention, the optical rotational position detection part comprises: a rotating member adapted to rotate in accordance with the rotation of the imaging part, and having optical characteristics differing from one another along a circumferential direction thereof; and an optical sensor for detecting that one of the optical characteristics of the rotating member which passes a prescribed position. Thus, the optical rotational position detection part can be realized or constructed from two simple components alone. In addition, the rotating member has a sufficient circumferential and radial area, so that reduction in the detection accuracy of the optical sensor can be minimized even if there take place variations, positional shifts or the like in the component parts between the rotating member and the optical sensor.

In another preferred form of the first aspect of the present invention, the rotating member comprises a reflector which is divided into a plurality of areas having light reflection factors differing from one another along a circumferential direction of the reflector; and the optical sensor comprises a reflective photosensor which projects light toward the reflector and receives the light reflected from the reflector. Thus, the optical rotational position detection part can be easily realized or constructed since the reflector can be easily made by the use of a printing technique or the like, and the reflective photosensor is also readily available.

In a further preferred form of the first aspect of the present invention, the rotating member comprises a transparent plate which is divided into a plurality of areas having light transmittances differing from one another along a circumferential direction of the transparent plate; and the optical sensor comprises a transparent type photosensor which projects light toward the transparent plate and receives the light reflected from the transparent plate.

According to a second aspect of the present invention, there is provided a portable electronic device comprising: a display for displaying an image; an imaging part supported for forward and reverse rotation so as to be able to take pictures of images, which can be displayed on the display, from a front side to a rear side of the display; an optical rotational position detection part for optically detecting a rotational position of the imaging part when rotated; and a control part for controlling the imaging part in a prescribed control mode based on the rotational position of the imaging part detected by the optical rotational position detection part.

In a preferred form of the second aspect of the present invention, the control mode includes an erect display mode in which an image taken by the imaging part is displayed on the display as it is when the rotational position of the imaging part detected the optical rotational position detection part is within a first range, and an inversion display mode in which an image taken by the imaging part is rotated by 180 degrees and then displayed on the display when the rotational position of the imaging part detected the optical rotational position detection part is within a second range.

In another preferred form of the second aspect of the present invention, the control mode includes an erect display mode in which an image taken by the imaging part is displayed on the display as it is when the rotational position of the imaging part detected the optical rotational position detection part is within a first range, and an inversion display mode in which an image taken by the imaging part is rotated by 180 degrees and then displayed on the display when the detected rotational position of the imaging part is within a second range, a non-shooting mode in which a power supply to the imaging part is turned off when the detected rotational position of the imaging part is within a third range, and a shooting mode in which a power supply to the imaging part is turned on when the detected rotational position of the imaging part is not within the third range.

According to a third aspect of the present invention, there is provided an imaging system comprising: a support structure; an imaging part supported for forward and reverse rotation by the support structure so as to take pictures from a front side to a rear side; and an optical rotational position detection part for optically detecting a rotational position of the imaging part when rotated.

The above and other objects, features and advantages of the present invention will become more readily apparent to those skilled in the art from the following detailed description of preferred embodiments of the present invention taken in conjunction with the accompanying drawings.
Fig. 1 is an external view showing a portable electronic device in the form of a foldable mobile phone according to a first embodiment of the present invention.
Fig. 2(A) is a front elevational view showing the state of a camera mounted on a chassis inside the mobile phone of Fig. 1.
Fig. 2(B) is a side elevational view of Fig. 2(A).
Fig. 3(A) is a view of the mounting state of the camera shown in Fig. 2, as seen obliquely.
Fig. 3(B) is a view of the mounting state of the camera in Fig. 3(A), as seen from the back thereof.
Fig. 4(A) is a cross sectional view taken along line X-X in Fig. 2(A).
Fig. 4(B) is a cross sectional view taken along line Y-Y in Fig. 2(B).
Fig. 5(A) is a cross sectional view showing the details of the camera of Fig. 1.
Fig. 5(B) is a view explaining the range of rotation of the camera based on Fig. 5(A).
Fig. 6 is an external view showing that the camera in Fig. 1 is oriented in a direction DO shown in Fig. 5(B).
Fig. 7 is an external view showing that the camera in Fig. 1 is oriented in a direction DA shown in Fig. 5(B).
Fig. 8 is an external view showing that the camera in Fig. 1 is oriented in a direction DB shown in Fig. 5(B).
Fig. 9 is an external view showing that the camera in Fig. 1 is oriented in a direction DC shown in Fig. 5(B).
Fig. 10 is an external view showing that the camera in Fig. 1 is oriented in a direction DD shown in Fig. 5(B).
Fig. 11 is an external view showing a portable electronic device in the form of a foldable mobile phone according to a second embodiment of the present invention with the camera shown in Fig. 1 being oriented in the direction DO shown in Fig. 5(B) when a transparent type photosensor is used in place of a reflective photosensor shown in Fig. 6.
Fig. 12 is an external view showing that the camera in Fig. 11 is oriented in the direction DA shown in Fig. 5(B).
Fig. 13 is an external view showing that the camera in Fig. 11 is oriented in the direction DB shown in Fig. 5(B).
Fig. 14 is an external view showing that the camera in Fig. 11 is oriented in the direction DC shown in Fig. 5(B).
Fig. 15 is an external view showing that the camera in Fig. 11 is oriented in the direction DD shown in Fig. 5(B).
Fig. 16 is a flow chart explaining the control operation of a control part when the mobile phone of Fig. 1 is actually used.
Fig. 17(A) is a front elevational view explaining a camera installed for forward and reverse rotation on a known portable electronic device.
Fig. 17(B) is a right side view of Fig. 17(A).
Fig. 17(C) is a rear view of Fig. 17(A).

Now, preferred embodiments of the present invention will be described below in detail while referring to the accompanying drawings.

### Embodiment 1.

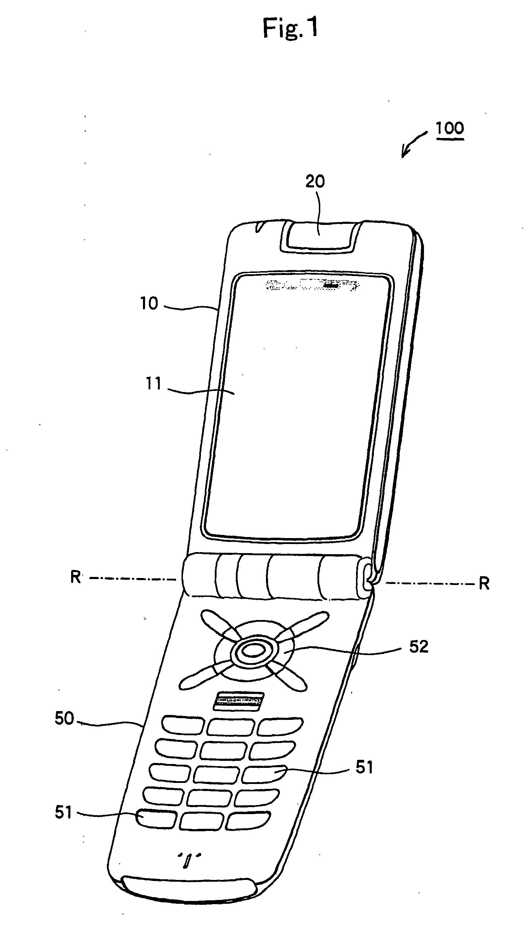

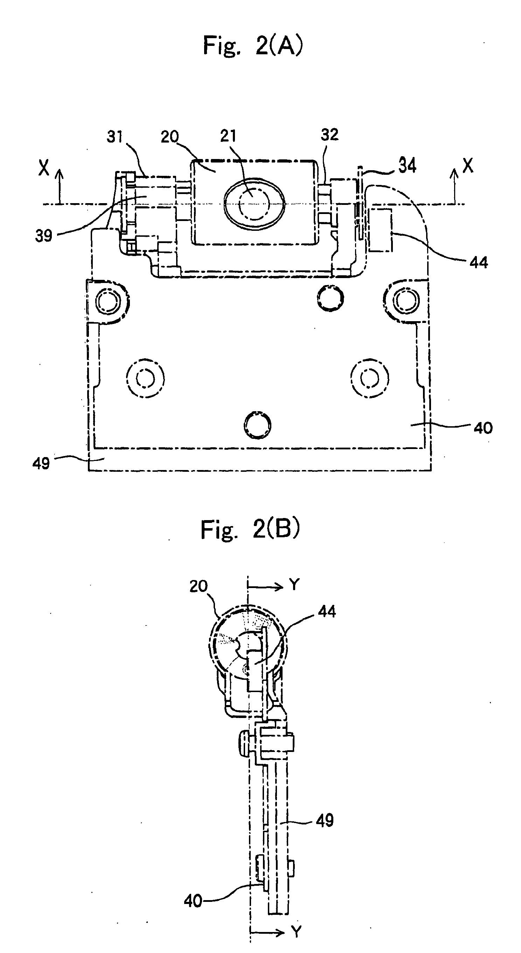

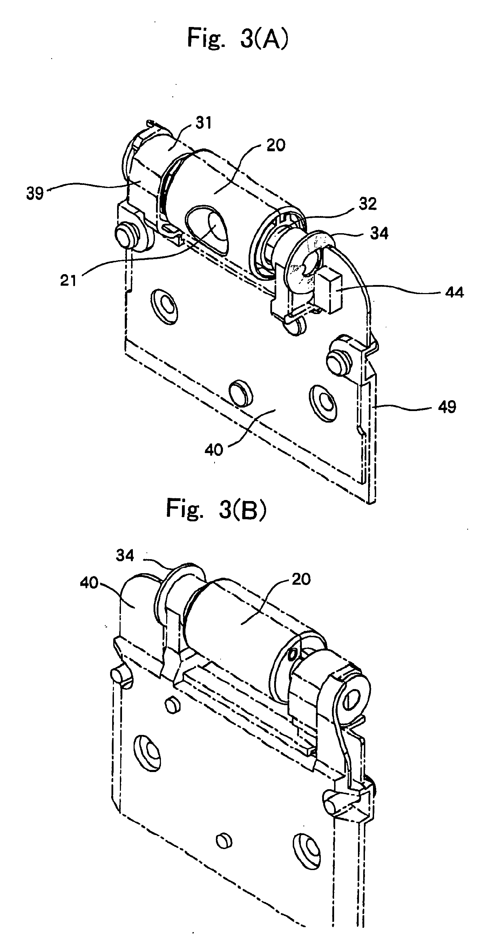

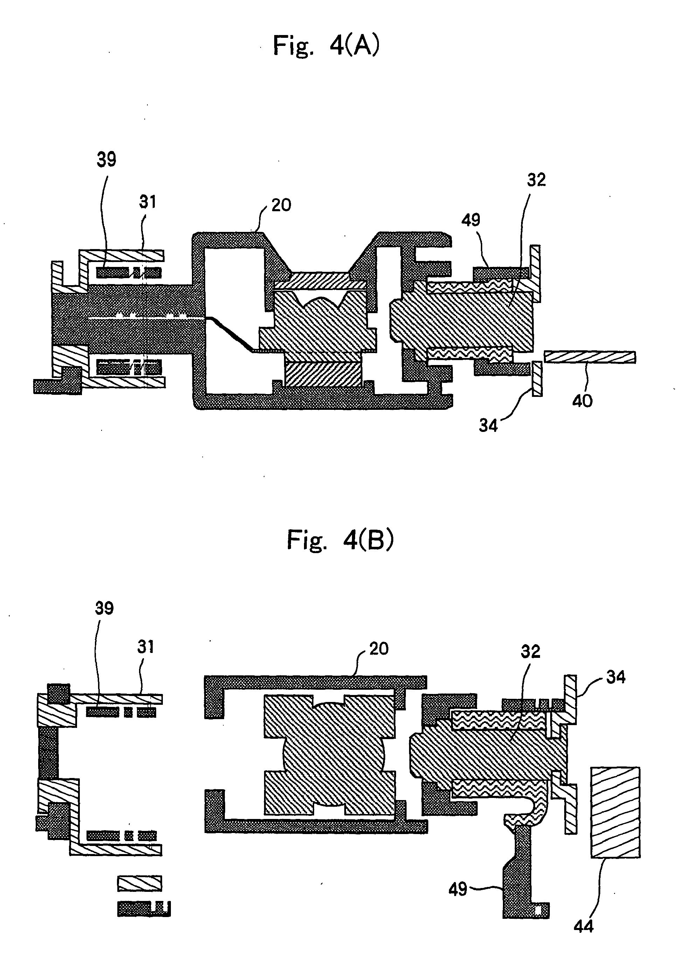

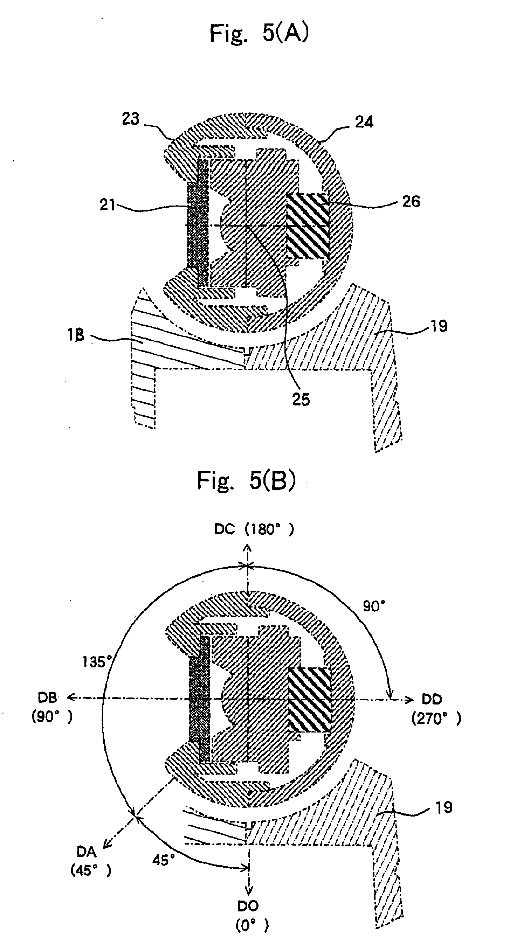

Fig. 1 is an external view of a portable electronic device in the form of a foldable mobile phone constructed in accordance with a first embodiment of the present invention. Fig. 2(A) is a front elevational view that shows the state of a camera mounted on the chassis inside the mobile phone of Fig. 1. Fig. 2(B) is a side elevational view of Fig. 2(A). Fig. 3(A) is a view of the mounting state of the camera shown in Fig. 2 as seen obliquely. Fig. 3(B) is a view of the mounting state of the camera shown in Fig. 3(A) as seen from the back thereof. Fig. 4(A) is a cross sectional view taken along line X-X in Fig. 2(A). Fig. 4(B) is a cross sectional view taken along line Y-Y in Fig. 2(B). Fig. 5(A) is an enlarged cross sectional view that shows the details of the camera in Fig. 1. Fig. 5(B) is a view explaining the range of rotation of the camera based on Fig. 5(A).

A mobile phone, which is shown in Fig. 1 and generally designated at reference numeral 100, is provided with an image display casing 10 and a key operation casing 50. These casings 10, 50 are connected with each other in such a manner that they can be folded about a rotation shaft or axis designated by line R-R. A display (flat panel display) 11 such as, for instance, an LCD and an imaging or picture-taking part in the form of a camera 20 are arranged on the image display casing 10. A plurality of keys 51, 52 and the like, through which a user can perform a variety of kinds of operations, are arranged on the key operation casing 50. In this case, as shown in Fig. 2 through Fig. 4, a central or rotation shaft of the camera 20 is supported at its opposite ends for forward and reverse rotation by a bearing 31 and a hinge module 32 which are mounted on a chassis 49. Note that the hinge module 32 is of a well-known structure having a cover provided on one end of the rotation shaft.

A reflector 34 is attached to one end face of the hinge module 32 connected with the central or rotation shaft of the camera 20. A reflective photosensor 44 is mounted on a printed circuit board 40 installed on the chassis 49 at a location opposite to the reflector 34. The reflective photosensor 44 is constructed such that it can detect the rotational position of the camera 20 by projecting a beam of light toward the reflector 34 and receiving the light reflected from the reflector 34, as will be described in detail later. In this case, the image data taken by the camera 20 is input to the printed circuit board 40 through a flexible cable 39, and then displayed on the display 11 under the control of a control part (not shown).

As shown in Fig. 5(A), the camera 20 includes a pair of camera cases 23, 24 that together form a substantially cylindrical configuration, lens 21 fitted in a partially cut-away central portion of the camera case 23, a camera module 25 arranged in the camera cases 23, 24 behind the lens 21, and a presser member 26 arranged in the camera case 24 for pressing or urging the camera module 25 and the lens 21 against an inner peripheral surface of the camera casing 23. In addition, as shown in Fig. 5(B), the camera 20 in this example is supported for free forward and reverse rotation in such a manner that the shooting or picture-taking direction (i.e., rotational angle G) of the camera 20 can be turned from a camera storage position D0 (i.e., 0 degrees as a reference angular position) in which the lens 21 is directed in a vertically downward direction, to a camera rotation limit position DD (i.e., 270 degrees) in which the lens 21 is directed in the horizontally rearward direction, passing through a first control mode switching position DA (i.e., 45 degrees) in which the lens 21 is directed in a forward and downward direction at an angle of 45 degrees from the horizontal plane, a front position DB (i.e., 90 degrees) in which the lens 21 is directed in the horizontally forward direction, and a second control mode switching position DC (i.e., 180 degrees) in which the lens 21 is directed in the vertically upward direction.

When the camera 20 is turned or rotated from the camera storage position D0 (0 degrees) to reach the first control mode switching position DA (45 degrees), the control part (not shown) switches on the power supply (i.e., switches the control mode into the shooting mode), which has been in an off state until then with the control mode being in the camera storage mode (non-shooting mode). The control part recognizes that an angular range of 135 degrees from the first control mode switching position DA (45 degrees) up to the second control mode switching position DC (180 degrees) is a normal shooting range, and hence an erect image taken by the camera 20 is displayed on the display 11 as it is in accordance with the erect display mode. During the time when the camera 20 is being further rotated through an angle of 90 degrees from the second control mode switching position DC (180 degrees) to the camera rotation limit position DD (270 degrees), the control part assumes that the image taken by the camera 20 is an inverted image, whereby the photographic image is rotated by 180 degrees and then displayed on the display 11 as an erect image in accordance with the inversion display mode. (In this case, even if the rotational direction of the camera 20 is reversed, the control part controls the image display in a similar control mode.)

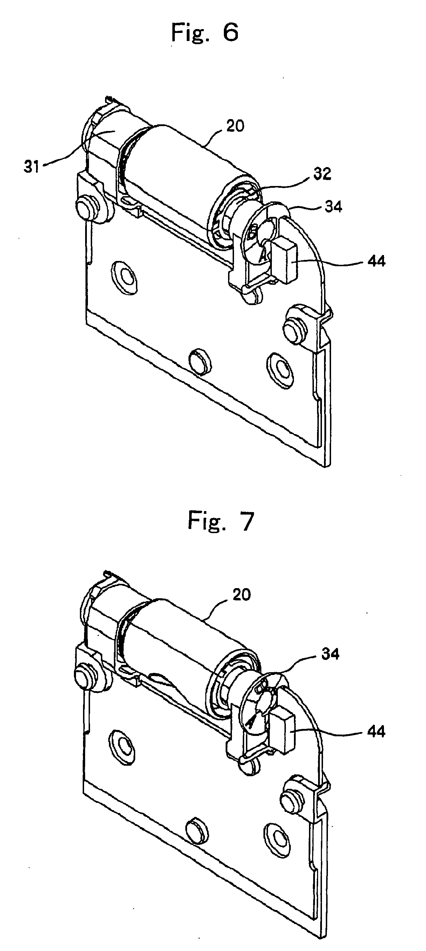

Now, reference will be made to the case where the control part performs the camera storage mode, the erect display mode and the inversion display mode by using the reflective photosensor in accordance with the rotational angle G of the camera, as described above. As shown in Fig. 6 through Fig. 10, the reflector 34 in Fig. 2 and Fig. 3 is of a disk-like configuration, and is circumferentially divided into a plurality of sector areas. The plurality of sectorial reflection areas "A", "B" and "C" are formed to have mutually different optical characteristics or different reflection factors RF with respect to light, as illustrated in Table 1 below. (For instance, symbols "A", "B" and "C" are printed on the corresponding areas of the reflector 34 formed of a transparent acrylic plate.) Here, note that the output values P0, P1, P2 of the reflective photosensor 44 are as follows: P0 < P1 < P2.

**Table 1**

| Camera rotation angle (degrees) | Area | Reflection factor (%) | Sensor output | Control mode |
|---|---|---|---|---|
| 0 ≦ G < 45 | A | RF ≦ 10 | P0 | Storage |
| 45≦G < 180 | C | 10 <RF ≦ 90 (Recommendation value 50 ± 10) | P1 | Erect display |
| 180 ≦ G ≦ 270 | B | 90 < RF | P2 | Inversion display |

In a rotational range of the camera 20 from a rotational angle of 0 degrees as shown in Fig. 6 to a rotational angle of 45 degrees as shown in Fig. 7, almost the whole field of view of the lens 21 of the camera 20 is disturbed or blocked by casing halves 18, 19 of the image display casing 10 (see Fig. 5). In this case, the reflective photosensor 44 receives the light reflected from the area "A" of the reflector 34 where the reflection factor RF is the lowest or smallest, and hence the output value (for instance, current value or voltage value) of the reflective photosensor 44 becomes to be a small output value P0, which is the smallest among those of all the control modes. Upon detection of such a lowest or smallest output value P0, the control part assumes that the camera is in the camera storage mode, and keeps the power supply for the camera 20 in an "off' state. When the camera 20 is rotated to reach a state or position in which the rotation angle G of the camera 20 is 45 degrees as shown in Fig. 7, the reflective photosensor 44 begins to receive the light reflected from the area "C" of the reflector 34 where the reflection factor RF is medium. In this case, the reflective photosensor 44 generates an output value P1 which is larger than that for the area "A". Upon detection of this medium output value P1, the control part assumes that the camera has come into the erect display mode, and switches the power supply into an "on" state. At the same time, the images taken by the camera 20 are displayed on the display 11 as erect images in accordance with the erect display mode in which pictures of objects at the front side taken by the camera 20 are displayed as they are.

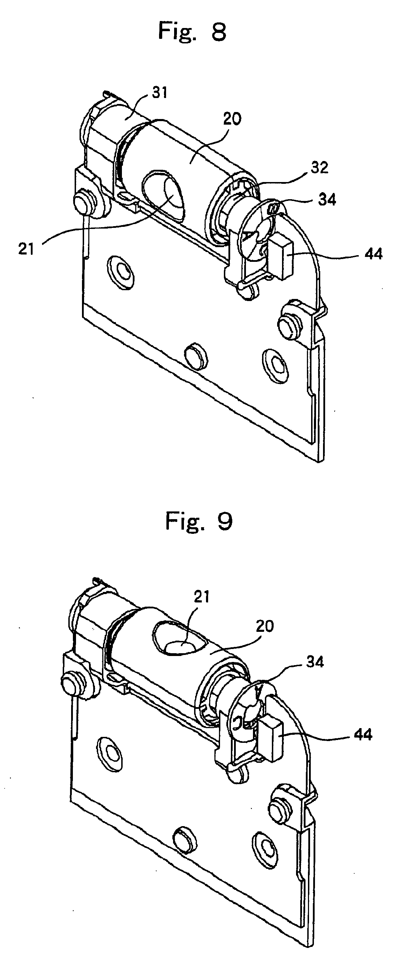

In a rotational range of the camera 20 where the rotational angle G is from the first control mode switching position DA (45 degrees) up to the second control mode switching position DC (180 degrees; see Fig. 9) via the front position DB (90 degrees; see Fig. 8), the reflective photosensor 44 receives the light reflected from the area "C" of the reflector 34, and hence the control part continues the erect display mode. When the rotation angle G of the camera 20 reaches 180 degrees, the reflective photosensor 44 begins to receive the light reflected from the area "B" of the reflector 34 where the reflection factor RF is the highest or largest, as shown in Fig. 9. As a result, the output value of the reflective photosensor 44 is larger in this area than in the other areas, and hence it becomes to be the greatest output value P2. Upon detection of this greatest output value P2, the control part assumes that the camera has come into the inversion display mode in which the camera takes pictures of objects at the rear side. Thus, the image taken by the camera 20 is started to be rotated by 180 degrees into an erect image which is then displayed on the display 11. The reflective photosensor 44 receives the reflected light from the area "B" of the reflector 34 until the rotation angle G of the camera 20 reaches the camera rotation limit position DD of 270 degrees, so that the control part continuously performs the inversion display mode.

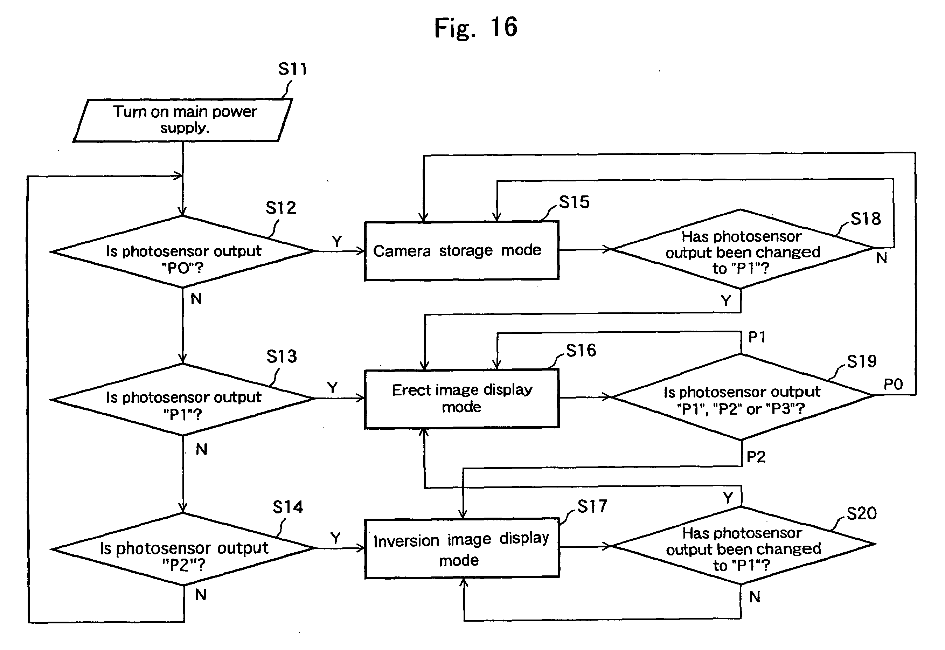

Subsequently, reference will be made to the control operation of the control part in the actual working condition of the above-mentioned mobile phone 100 while referring to the flow chart in Fig. 16. When power is turned on to put the mobile phone 100 into its working condition (step S11), the control part determines whether the output of the reflective photosensor 44 is the output value P0 (step S12), or the output value P1 (step S13), or the output value P2 (step S14). When it is determined in step S12 that the output of the reflective photosensor 44 is the output value P0, the control part assumes that the camera is in the camera storage mode, and puts the power supply to the camera 20 into an "off' state (step S15). When it is determined in step S13 that the output of the reflective photosensor 44 is the output value P1, the control part assumes that the camera 20 is in the erect display mode, and puts the power supply to the camera 20 into an "on" state. At the same time, the image taken by the camera 20 is displayed as an erect image on the display 11 as it is (step S16). When it is determined in step 14 that the output of the reflective photosensor 44 is the output value P2, the control part assumes that the camera 20 is in the inversion display mode, and puts the power supply to the camera into an "on" state. At the same time, the image taken by the camera 20 is rotated by 180 degrees into an erect image which is then displayed on the display 11 (step S17).

After the camera storage mode has been set in step S15, it is determined whether the output of the reflective photosensor 44 has changed to the output value P1 as a result of the camera 20 being rotated by the user (step S18). When the photosensor output is the output value P1, the control flow proceeds to step S16. After the erect display mode is set in step S16, the control part determines whether the output of the reflective photosensor 44 has changed to the output value P0 or P1 or P2 as a result of the camera 20 being rotated by the user (step S19). When the photosensor output is the output value P1, the erect display mode is continued, whereas when the photosensor output is the output value P0, the control flow proceeds to step S15, and when the photosensor output is the output value P2, the control flow proceeds to step S17. After the inversion display mode is set in step S17, it is determined whether the output of the reflective photosensor 44 has changed to the output value P1 as a result of the camera 20 being rotated by the user (step S20). When the photosensor output is the output value P2, the inversion display mode is maintained, whereas when the photosensor output is the output value P1, the control flow proceeds to step S16.

### Embodiment 2.

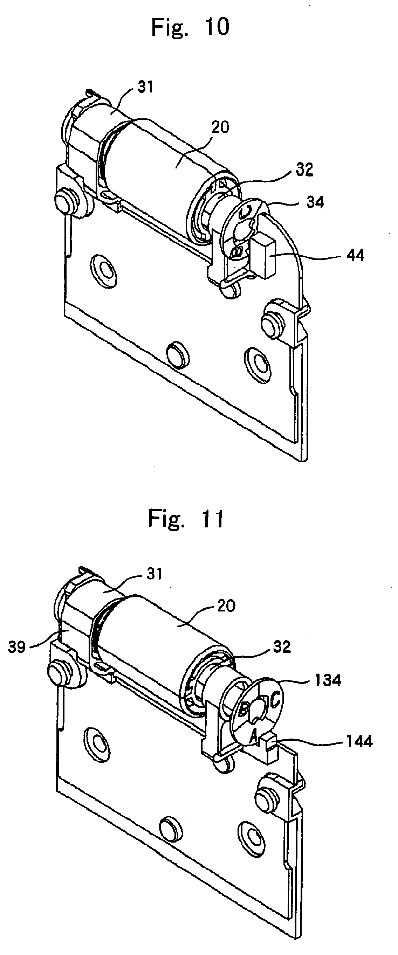

Next, reference will be made to the case where the control part performs the camera storage mode, the erect display mode and the inversion display mode by using a transparent type photosensor in accordance with the rotational angle G of the camera while referring to Fig. 11 through Fig. 15. In this embodiment, it is constructed such that by using a transparent plate 134 and a transparent type photosensor 144 instead of the reflector 34 and the reflective photosensor 44 shown in Fig. 6 through Fig. 10, the rotating transparent plate 134 having a plurality of sectorial transparent areas "A", "B" and "C" passes between a light emitting diode and a photoreceptor or light receiving element which are arranged at opposite ends of the concave or U-shaped transparent type photosensor 144. The transparent or transmission areas "A", "B" and "C" are formed so as to have mutually different transmittances PT with respect to light, as shown in Table 2 below. (For instance, symbols "A", "B" and "C" are printed on the corresponding areas of the transparent plate 134 formed of a transparent acrylic plate.) Note that the output values Q0, Q1, Q2 of the transparent type photosensor 144 are as follows: Q0 < Q1 < Q2.

**Table 2**

| Camera rotation angle (degrees) | Area | Reflection factor (%) | Sensor output | Control mode |
|---|---|---|---|---|
| 0 ≦ G < 45 | A | PT ≦ 10 | Q0 | Storage |
| 45 ≦ G < 180 | C | 10 < PT ≦ 90 (Recommendation value 50 ± 10) | Q1 | Erect display |
| 180 ≦ G ≦ 270 | B | 90 < PT | Q2 | Inversion display |

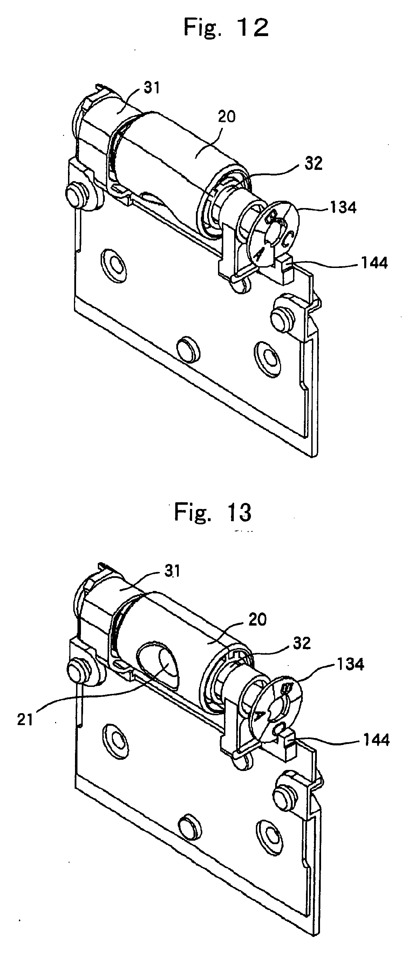

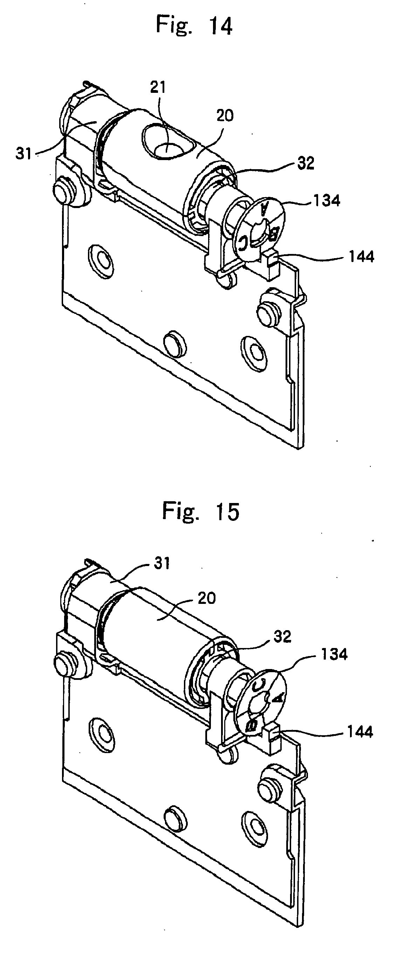

Since the portable electronic device according to this embodiment is constructed in the above manner, the operation of the control part as illustrated in Fig. 11 through Fig. 15 is substantially the same as that as illustrated in Fig. 6 through Fig. 10 while excluding a difference between reflection and transparency or transmission. That is, when the camera 20 is rotated from the storage state of Fig. 11 to the state of Fig. 12, the photosensor output changes from "Q0" to "Q1". As a result, the control part switches on the power supply to the camera 20 that has been in an "off' state until then, and performs the image display in accordance with the erect display mode until the state of Fig. 14 is reached via the state of Fig. 13. From the state of Fig. 14, the photosensor output changes to "Q2" and hence the control part switches the image display into the inversion display mode. Between the state of Fig. 14 and the state of Fig. 15, the inversion display mode is maintained so that the display according to the inversion display mode is performed on the display.

Since the areas "A", "B", and "C" are of the sector shapes, respectively, as clearly from the above-mentioned two examples, the positional relation between the reflector 34 and the reflective photosensor 44 as well as the positional relation between the transparent plate 134 and the transparent type photosensor 144 does not need so much accuracy for individual components and assemblies thereof. Moreover, the rotation angle G of the camera 20 for determination of each control mode is also large enough, and hence as compared with the aforementioned known lever type sensor, there is obtained an advantageous effect similar to the case where the switching stroke for switching of the control mode is made very large. In the above-mentioned two embodiments, the control part controls the "on" and "off' operations of the power supply to the camera 20 by means of a combination of the reflector 34 and the reflective photosensor 44 or another combination of the transparent plate 134 and the transparent type photosensor 144. However, such control on the power supply to the camera 20 may be carried out by another mechanism (for instance, a conventionally used power switch).

In addition, although in the above-mentioned embodiments, description has been made by taking a mobile phone as an example of a portable electronic device, the portable electronic device may be other electronic equipment necessary to use a rotatable camera, such as, for example, a notebook type personal computer, a PDA (personal digital assistant), a digital camera, a digital video camera, etc. Furthermore, it is preferable that the camera 20, the bearing 31, the hinge module 32, the reflector 34 and the reflective photosensor 44 (or the transparent plate 134 and the transparent type photosensor 144) be assembled onto a subchassis and a subboard for dedicated use with the camera 20 to form an integral camera unit as an example of an imaging system. In this case, upon final assembly, such a camera unit is detachably mounted on the chassis 49 by means of screws or the like. However, it is desirable that electric signals be transmitted between the camera unit and the printed circuit board 40 on the chassis 49 by way of flexible cables and connectors detachably connected with the printed circuit board 40.

As can be seen from the foregoing description, a portable electronic device according to the present invention as constructed above provides the following excellent advantages. That is, as the rotational position of a rotating camera is optically detected by an optical rotational position detection part, even if the number of rotations of an imaging part increases due to repeated shootings or shots from the front side to the rear side, there will take place substantially no reduction in detection accuracy resulting from wear or the like which would be caused in conventional rotational position detection parts. Also, such an optical rotational position detection part of the present invention can be easily realized or constructed by two simple components alone, i.e., a reflector and a reflective photosensor or a transparent plate and a transparent type photosensor. In addition, since each transparent or transmission area of a rotating member such as the reflector or the transparent plate arranged for integral rotation with the camera has a sufficient circumferential and radial area, reduction in the detection accuracy of an optical sensor such as the reflective photosensor or the transparent type photosensor, which detects the rotational position of the rotating member, can be minimized even if there take place variations, positional shifts or the like in the component parts between the rotating member and the optical sensor. Further, the imaging part and the optical rotational position detection part can be formed into an integral imaging unit, thereby making it easy to assemble the entire device.

While the invention has been described in terms of preferred embodiments, those skilled in the art will recognize that the invention can be practiced with modifications within the spirit and scope of the appended claims.

## Claims

1. A portable electronic device comprising:
a display (11) which displays an image;
an imaging part (20) supported for forward and reverse rotation so as to be able to take pictures of images, which can be displayed on said display, from a front side to a rear side of said display; and
an optical rotational position detection part which optically detects a rotational position of said imaging part when rotated.

2. The portable electronic device as set forth in claim 1, **characterized in that**
said optical rotational position detection part comprises:
a rotating member (34;134) adapted to rotate in accordance with the rotation of said imaging part, and having optical characteristics differing from one another along a circumferential direction thereof; and
an optical sensor (44;144) which detects that one of the optical characteristics of said rotating member which passes a prescribed position.

3. The portable electronic device as set forth in claim 2, **characterized in that**
said rotating member comprises a reflector (34) which is divided into a plurality of areas having light reflection factors differing from one another along a circumferential direction of said reflector, and
said optical sensor comprises a reflective photosensor (44) which projects light toward said reflector and receives the light reflected from said reflector.

4. The portable electronic device as set forth in claim 2, **characterized in that**
said rotating member comprises a transparent plate (134) which is divided into a plurality of areas having light transmittances differing from one another along a circumferential direction of said transparent plate, and
said optical sensor comprises a transparent type photosensor (144) which projects light toward said transparent plate and receives the light reflected from said transparent plate.

5. The portable electronic device as set forth in any of the preceeding claims, **characterized by** further comprising
a control part which controls said imaging part in a prescribed control mode based on the rotational position of the imaging part detected by said optical rotational position detection part.

6. The portable electronic device as set forth in claim 5, **characterized in that**
said control mode includes an erect display mode in which an image taken by said imaging part is displayed on said display as it is when the rotational position of said imaging part detected said optical rotational position detection part is within a first range, and an inversion display mode in which an image taken by said imaging part is rotated by 180 degrees and then displayed on said display when the rotational position of the imaging part detected said optical rotational position detection part is within a second range.

7. The portable electronic device as set forth in claim 5, **characterized in that**
said control mode includes a non-shooting mode in which a power supply to said imaging part is turned off when the rotational position of the imaging part detected said optical rotational position detection part is within a third range.

8. The portable electronic device as set forth in claim 5, **characterized in that**
said control mode includes a shooting mode in which a power supply to said imaging part is turned on when the rotational position of the imaging part detected said optical rotational position detection part is not within a third range.

9. An imaging system comprising:
a support structure;
an imaging part (20) supported for forward and reverse rotation by said support structure so as to take pictures from a front side to a rear side; and
an optical rotational position detection part which optically detects a rotational position of said imaging part when rotated.

10. The imaging system as set forth in claim 9, wherein
said optical rotational position detection part comprises:
a rotating member (34;134) adapted to rotate in accordance with the rotation of said imaging part, and having optical characteristics differing from one another along a circumferential direction thereof; and
an optical sensor (44;144) which detects that one of the optical characteristics of said rotating member which passes a prescribed position.

11. The imaging system as set forth in claim 10, wherein
said rotating member comprises a reflector (34) which is divided into a plurality of areas having light reflection factors differing from one another along a circumferential direction of said reflector, and
said optical sensor comprises a reflective photosensor (44) which projects light toward said reflector and receives the light reflected from said reflector.

12. The imaging system as set forth in claim 10, **characterized in that**
said rotating member comprises a transparent plate (134) which is divided into a plurality of areas having light transmittances differing from one another along a circumferential direction of said transparent plate, and
said optical sensor comprises a transparent type photosensor (144) which projects light toward said transparent plate and receives the light reflected from said transparent plate.
